# EUROPEAN PATENT APPLICATION

(11) **EP 4 606 563 A2**
(43) Date of publication of application: **27.08.2025**
(21) Application number: 25158025.4
(22) Date of filing: 14.02.2025
(51) Int. Cl.: B32B 3/26, B32B 5/02, B32B 5/26, B32B 7/02, B32B 7/06, B32B 7/12, B60R 13/02, B60R 21/04, E04B 1/92, E04F 13/00, B60N 2/60, A47F 5/00, A47F 7/16

(54) **REPLACEABLE PROTECTIVE LINERS FOR VEHICLES**

(30) Priority: 21.02.2024 US 202463556020 P
(71) Applicant: Garland Industries, Inc., Independence, Ohio 44131 (US)
(72) Inventor: SOKOL, David, Vermillion Township (US); RUS, Melissa, Independence (US); PETERSON, Kali, Independence (US); HANSON, Matthew, Chagrin Falls (US); TAYLOR, Curtis, Chagrin Falls (US)
(74) Representative: Grosse Schumacher Knauer von Hirschhausen

(57) **Abstract**

Replaceable non-porous, protective liners that can be repositionable and can optionally be customized to various vehicle makes and models.

## Description

### REFERENCED APPLICATIONS

The present application claims priority to United States Provisional Application Serial No. 63/556,020 filed February 21, 2024, which is incorporated herein by reference

### FIELD OF DISCLOSURE

The present disclosure relates generally to protective liners that can be used as a seat cover or mat in vehicles, and more specifically to a protective liner having a liquid retention layer, a backing and/or intermediate layer that may or may not be porous, and an optional adhesive backing layer that may or may not be porous that enables the protective liner to releasably secured to a surface (e.g., seat, car floor, etc.), and optionally be repositionable on the surface that the protective liner is releasably secured thereto, and which the protective liner can be optionally quickly customized and formed to correspond to or closely thereto one or more interior regions of the vehicle and/or exterior bed (e.g., truck bed, etc.) of various vehicle makes and models and/or beds of various types of trailers. The protective liner can optionally be used with a hanger arrangement to facilitate in the storage and/or cleaning of the protective liner.

### BACKGROUND OF DISCLOSURE

Floor mats and liners and seat covers used in automobiles and other vehicles are commonplace in modem society. However, such floor mats and liners and seat covers: (i) are often made of porous materials that retrain liquid when they become wet and compromise the integrity of an adhesive layer and the area to be protected; (ii) fail to include any adhesive layers, thus are prone to movement and provide little protection; (iii) come in a "one size fits all" shape which may not fully cover a desired area; (iv) may include strong adhesive layers that damage or leave residue to a vehicle area when removed; and/or (v) inconvenient to store and/or clean. Further, conventional mats and liners that are customizable to a specific model vehicle are expensive and can take months to receive.

Accordingly, there is an ongoing need for a protective liner for vehicles that: (a) includes a liquid retention layer having a backing and/or intermediate layer and/or adhesive layer that allows for securing, repositioning and/or subsequent removal of the protective liner from a surface; (b) is removable without damaging vehicle areas; (c) can optionally be used with existing trays in vehicles to provide additional protection; (d) optionally includes a reinforcement layer, (e) is optionally customizable so as to nearly or completely cover desired areas of specific vehicle models, wherein the protective liner optionally includes pre-formed cut lines that correspond to specific vehicle models and/or to specific areas within the vehicle, thereby allowing a user to easily and quickly achieve the desired shape of the protective liner for a desired location in a vehicle; (f) can optionally be used with a releasable hanger arrangement that facilitates in convenient storage of the protective liner and/or easier cleaning of the protective liner; and/or (g) can optionally include pre-formed cut lines that correspond to specific vehicle models and/or to specific areas within the vehicle, thereby allowing a user to easily and quickly achieve the desired shape of the protective liner for a desired location in a vehicle.

### SUMMARY OF DISCLOSURE

The present disclosure relates generally to a protective liner that can be used as a seat cover or mat for use in vehicles that is formed of a liquid retention layer having a backing and/or intermediate layer and/or adhesive layer, and wherein at least one of the backing and/or intermediate layer and/or adhesive layer are non-porous. The protective liner can be configured to enable a user to reposition the protective liner on a surface and/or remove the protective liner from a surface. The protective liner can optionally be customizable for use with various vehicle makes and models and beds of various types of trailers. As can be appreciated, the protective liner in accordance with the present disclosure is particularly directed for use as a mat or seat cover or trunk cover or truck bed cover or cargo area cover or cargo bay cover in a vehicle, and will be described with particular reference thereto; however, it can be appreciated that the protective liner in accordance with the present disclosure can have other or additional uses (e.g., floor mat in a building, home or other structure, doorway mat in a building, home or other structure, mat for use on a sidewalk, driveway, garage, parking lot, playground, deck, boat surface, counter surface, table surface, etc.).

In one non-limiting aspect of the present disclosure, there is provided a protective liner that (a) includes a liquid retention layer, (b) backing and/or intermediate layer and/or adhesive layer, wherein one or both of the backing and/or intermediate layer and/or adhesive layer inhibits or prevents liquids form passing fully through the protective liner, and also optionally allows for securing, repositioning and/or subsequent removal of the protective liner from a surface; (c) is removable without damaging vehicle areas; (d) can optionally be used with existing trays in vehicles to provide additional protection; (e) optionally includes a reinforcement layer, (f) is optionally customizable so as to nearly or completely cover desired areas of specific vehicle models, wherein the protective liner optionally includes pre-formed cut lines that correspond to specific vehicle models and/or to specific areas within the vehicle, thereby allowing a user to easily and quickly achieve the desired shape of the protective liner for a desired location in a vehicle; (g) can optionally be used with a releasable hanger arrangement that facilitates in convenient storage of the protective liner and/or easier cleaning of the protective liner; (h) can optionally include pre-formed cut lines that correspond to specific vehicle models and/or to specific areas within the vehicle, and optional instructions thereby allowing a user to easily and quickly achieve the desired shape of the protective liner for a desired location in a vehicle, and/or (i) can optionally include a release liner.

In another non-limiting aspect of the present disclosure, there is provided a protective liner that includes a liquid retention layer. The liquid retention layer may or may not include absorbable components. In one non-limiting embodiment, the liquid retention layer is partially or fully formed of polymer material. Non-limiting polymers that can be used, but are not limited to, include one or more of aramid fibers (e.g., poly-para-phenylene terephthalamide [Kevlar^{®}]), carbon fibers, fiberglass, boron fibers, polyethylene fibers, polypropylene fibers, recycled polymer fibers, polyethylene terephthalate fibers and/or plastic fibers. In one non-limiting formulation, the liquid retention layer is formed of 0.5 - 100% (and all values and ranges therebetween) recycled polymer material. In another non-limiting formulation, the liquid retention layer is formed of 60 - 100% recycled polymer material. Non-limiting recycled plastics and/or polymers that can be used to partially or fully form the liquid retention layer include, but are not limited to, recycled plastic bottles (e.g., recycled polyethylene bottles and/or containers, recycled polypropylene bottles and/or containers, etc.), recycled plastic or polymer components from vehicles (e.g., plastic window and windshield trim, etc.), recycled plastic or polymers from other sources (e.g., plastic agricultural products, consumer bags, plastic from recycled consumer products and appliances, recycles vinyl siding, recycles plastic panels, recycled industrial equipment, etc.), post-consumer and/or post-industrial recycled PET, recycled polyolefin plastics, recycled synthesized plastics, etc. In another non-limiting formulation, the liquid retention layer is partially or fully formed of fibers (e.g., the fibers form 10-100% and all values and ranges therebetween of the liquid retention layer). In another non-limiting formulation, the fibers that are used to partially or fully form the liquid retention layer are formed of 60 - 100% (and all values and ranges therebetween) post-consumer and/or post-industrial recycled PET (e.g., the post-consumer and/or post-industrial recycled PET, which material can be used to layer provide superior liquid retention while promoting sustainability through the use of recycled plastics. In another non-limiting embodiment, the length of the fibers (when used) that are used to partially or fully form the liquid retention layer can have an average length of 1 micron to 30 mm (and all values and ranges therebetween). In another non-limiting embodiment, the fibers, when used, that partially or fully form the liquid retention layer can be formed of one or more materials. In another non-limiting embodiment, the fibers, when used, that partially or fully form the liquid retention layer can be formed of woven and/or non-woven fibers. In another non-limiting embodiment, the liquid retention layer can be partially or fully formed of one or more fiber layers. When the liquid retention layer is partially or fully formed of multiple fiber layers, the composition of two or more fiber layers can be the same or different, the thickness of two or more fiber layers can be the same or different, and/or the shape and/or size of the two or more fiber layers can be the same or different. In another non-limiting embodiment, the thickness of each of the fiber layers, when used, that are used to partially or fully form the liquid retention layer is 0.1-20 mm (and all values and ranges therebetween). When the liquid retention layer is partially or fully formed of multiple fiber layers, the one or more fiber layers of the liquid retention layer can be connected together by one or more arrangements (e.g., stitching, adhesive, weaving, heat bonding, needle punching, clamp, staples, etc.). In another non-limiting embodiment, the fibers used in the one or more fiber layers of the liquid retention layer can be connected together by one or more arrangements (e.g., stitching, adhesive, weaving, heat bonding, needle punching, etc.). In another non-limiting embodiment, the one or more fiber layers that are used to partially or fully form the liquid retention layer are used to form a liquid retention media that is liquid penetrable, thus enabling liquid that is not retained by one or more portions of the liquid retention layer (e.g., retained by one or more absorbent portion of the liquid retention layer, etc.) to pass through the non-absorbent portions of the liquid retention layer. In one non-limiting configuration, 50-100% (and all values and ranges therebetween) of the liquid that contacts a top surface of the liquid retention layer will fully pass through the liquid retention layer in less than 5 minutes (e.g., 0-4.999 minutes and all values and ranges therebetween). In one non-limiting configuration, the liquid retention layer is partially or fully formed of one or more fiber layers of spunbond fibers that are partially or fully formed of the post-consumer and/or post-industrial recycled polyester and/or PET, and wherein the fibers are bounded together by heavy-duty zigzag stitching such that the liquid retention layer can withstand foot and light-wheeled traffic, while maintaining its integrity until saturated with liquid and/or visibly worn. In another non-limiting configuration, the liquid retention layer includes 0-60 wt.% (and all values and ranges therebetween) liquid absorbable materials (e.g., cotton, wool jute, fabrics [e.g., cellulose based fabrics, etc.], paper, sponge, activated carbon, liquid swelling polymer [e.g., sodium polyacrylate, alginate, gelatin, starch, hyaluronic acid, keratin, fibrin, cellulose, and collagen, etc.]).

In another non-limiting aspect of the disclosure, there is provided a protective liner that includes a liquid retention layer and a backing and/or intermediate layer that is connected to the bottom surface of the liquid retention layer. The backing and/or intermediate layer may or may not be porous. When the backing and/or intermediate layer is optionally a non-porous layer, the backing and/or intermediate layer is formulated, configured and/or designed to inhibit or prevent liquid from passing through the backing and/or intermediate layer. In one non-limiting embodiment, when the backing and/or intermediate layer is a non-porous layer, the backing and/or intermediate layer is at least 1.5 times (e.g., 1.5-100000000 times and all values and ranges therebetween) less porous than the liquid retention layer. In another non-limiting embodiment, when the backing and/or intermediate layer is a non-porous layer, the backing and/or intermediate layer forms a water impenetrable barrier. In another non-limiting embodiment, the thickness of the backing and/or intermediate layer is less than the thickness of the liquid retention layer. In one non-limiting configuration, the thickness of the backing and/or intermediate layer is 0.001-60% (and all values and ranges therebetween) the thickness of the liquid retention layer. The backing and/or intermediate layer can be formed of one or more layers of material. In another non-limiting embodiment, the backing and/or intermediate layer can include one or more polymers (e.g., acrylate polymer, natural rubber, synthetic thermoplastic elastomer, silicone rubber, etc.). In one non-limiting configuration, the backing and/or intermediate layer is or includes a high-temperature polymer that has a softening point of 140-240°F (and all values and ranges therebetween). The backing and/or intermediate layer can be applied to a) the bottom of the liquid retention layer or b) the bottom of an optional reinforcement layer, which in turn is connected to the bottom of the liquid retention layer; and the backing and/or intermediate layer can be applied to the liquid retention layer or optional reinforcement layer in liquid form by one or more application processes (e.g., dip coating, roll coating, spray coating, brush coating, etc.) and thereafter allowed to dry on the bottom of the liquid retention layer or bottom of a reinforcement layer to form the backing and/or intermediate layer. As can be appreciated, the backing and/or intermediate layer can be a preformed layer that is connected to the bottom surface of the liquid retention layer or bottom of an optional reinforcement layer by various arrangements (e.g., adhesive, melted connection, stitching, staples, rivets, clamp, etc.). In another non-limiting embodiment, the backing and/or intermediate layer can optionally include 0-50 wt.% fibers. In one non-limiting configuration, the fiber content in the backing and/or intermediate layer is less than the fiber content of said liquid retention layer. In one non-limiting configuration, the fiber content in the backing and/or intermediate layer is 0 wt.%. In one non-limiting configuration, the composition of the backing and/or intermediate layer is different from the composition of the liquid retention layer.

In another non-limiting aspect of the disclosure, there is provided a protective liner that includes a liquid retention layer that has a backing and/or intermediate layer, wherein optionally the backing and/or intermediate layer is or includes an adhesive layer. The adhesive layer, when used, can be used to a) facilitate in securing the backing and/or intermediate layer to the liquid retention layer when the adhesive layer is separate from the backing and/or intermediate layer, b) facilitate in securing an optional reinforcement layer to the liquid retention layer and/or the backing and/or intermediate layer, and/or c) facilitate in securing (e.g., permanently or releasably securing) the protective liner to a surface (e.g., floor, interior portion of a vehicle, floor mat of a vehicle, truck bed, truck, etc.). In one non-limiting configuration, the adhesive layer is also the backing and/or intermediate layer, and the adhesive layer is a non-porous layer. In another non-limiting configuration, the adhesive layer is a separate layer from the backing and/or intermediate layer, and the adhesive layer and/or the backing and/or intermediate layer are non-porous layers. In one non-limiting configuration, the adhesive layer is used to form a releasable connection between the protective liner and a surface. In one non-limiting formulation, the adhesive layer is or includes a high-temperature aqueous pressure-sensitive adhesive. In another non-limiting formulation, the pressure-sensitive adhesive has a softening point of 140-240°F (and all values and ranges therebetween). The adhesive layer can optionally be applied to a) the bottom of the liquid retention layer, b) bottom of backing and/or intermediate layer, and/or c) bottom of an optional reinforcement layer. The application of the adhesive layer to one or more components of the protective liner can be by applying a liquid form of the adhesive by one or more application processes (e.g., dip coating, roll coating, spray coating, brush coating, etc.) and thereafter allowing the adhesive to dry. As can be appreciated, the adhesive layer can be a preformed layer that is connected to one or more components of the protective layer by one or more connection arrangements (e.g., adhesive, melted connection, stitching, staples, rivets, clamp, etc.). In one non-limiting configuration, the backing and/or intermediate layer is in the form of the adhesive layer; thus, the adhesive layer functions both as a) a non-porous layer that inhibit or prevent liquid form fully passing through the protective liner, and b) an adhesive surface that secures (e.g., permanently or releasable secures) the protective liner to a surface. In one non-limiting configuration, the protective liner includes a liquid retention layer and an adhesive layer that is connected to the bottom surface of the liquid retention layer, and wherein the adhesive layer functions both as a) a non-porous layer that inhibit or prevent liquid form fully passing through the protective liner, and b) an adhesive surface that secures (e.g., permanently or releasable secures) the protective liner to a surface; and wherein the adhesive layer is optionally a high-temperature polymer that has a softening point of greater than 180°F and the bottom surface functions as an adhesive between 32-180°F; and wherein the liquid retention layer may or may include absorbent materials; and wherein the liquid retention layer may or may not prevent liquid form passing through the liquid retention layer. In another non-limiting configuration, the protective liner includes a liquid retention layer, a reinforcement layer that is connected to the bottom surface of the liquid retention layer, and an adhesive layer that is connected to the bottom surface of the reinforcement layer, and wherein the adhesive layer functions both as a) a non-porous layer that inhibit or prevent liquid form fully passing through the protective liner, and b) an adhesive surface that secures (e.g., permanently or releasable secures) the protective liner to a surface; and wherein the adhesive layer is optionally a high-temperature polymer that has a softening point of greater than 180°F and the bottom surface functions as an adhesive between 32-180°F; and wherein the liquid retention layer may or may include absorbent materials; and wherein the liquid retention layer may or may not prevent liquid form passing through the liquid retention layer; and wherein the reinforcement layer may or may include absorbent materials; and wherein the reinforcement layer may or may not prevent liquid form passing through the liquid retention layer. In another non-limiting configuration, the adhesive layer allows for the securing, repositioning and/or subsequent removal of the protective liner from a surface (e.g., carpeting surface, tile surface, wood surface, concrete surface, linoleum surface, fabric surface, leather surface, plastic surface, rubber surface, metal surface, glass surface, ceramic surface, etc.). In one non-limiting configuration, the adhesive layer that forms an adhesive surface that allows for the securing, repositioning and/or subsequent removal of the protective liner from a surface without damaging such surface during the securing, repositioning and/or subsequent removal of the protective liner from the surface. In another non-limiting embodiment, the thickness of the adhesive layer is less than the thickness of the liquid retention layer. In another non-limiting embodiment, the thickness of the adhesive layer is less than the thickness of the optional reinforcement layer. In another non-limiting embodiment, the thickness of the adhesive layer is less than the thickness of the backing and/or intermediate layer when the adhesive layer does not form the backing and/or intermediate layer. In one non-limiting configuration, the thickness of the adhesive layer is 0.0001-60% (and all values and ranges therebetween) the thickness of one or more of the liquid retention layer, the optional reinforcement layer, and/or the backing and/or intermediate layer when the adhesive layer does not form the backing and/or intermediate layer. In another non-limiting embodiment, the adhesive layer is formed of a different material that that material used to form the liquid retention layer, the optional reinforcement layer, and/or the backing and/or intermediate layer when the adhesive layer does not form the backing and/or intermediate layer.

In another non-limiting aspect of the disclosure, the bottom surface of the adhesive layer can optionally include a release liner. Such release liner, when used, can be formed of a paper (e.g., kraft paper, super calendared kraft paper, clay-coated kraft paper, polymer-coated kraft paper, glazed paper, etc.) or a polymeric film (e.g., PET film, polypropylene film, polyolefins film, polyethylene films, PP films, etc.), or a paper that is coated with a polymeric film. The thickness of the release liner is generally 0.2-50 mil (and all values and ranges therebetween). In one non-limiting configuration, the thickness of the release liner (when used) is 1-10 mil. The thickness of the optional release liner is less than the thickness of the liquid retention layer. In one non-limiting configuration, the thickness of the optional release liner is 0.001-60% (and all values and ranges therebetween) the thickness of the liquid retention layer. The thickness of the optional release liner may be less, the same or greater or less than the thickness of a) the backing and/or intermediate layer, b) the optional reinforcement layer, or c) the adhesive layer.

In another non-limiting aspect of the disclosure, a reinforcement layer can optionally be used as a reinforcement for the protective liner. When a reinforcement layer is used, the reinforcement layer is located between the liquid retention layer and a) the backing and/or intermediate layer and/or b) the adhesive layer. The composition of the reinforcement layer can be the same or different from the liquid retention layer. The reinforcement layer may or may not be porous. In one non-limiting embodiment, the reinforcement layer can be in the form of one or more woven mats, non-woven mats, woven and nonwoven mats, sheets, one or more rovings, one or more rows of rovings, etc. The reinforcement layer can be formed of one or more of fiberglass, nylon, polyester, cotton, silk, wool, hemp, straw, bamboo, flax, jute, modal, asbestos fibers, basalt fibers, aramid fiber, acrylic fiber, polyurethane fiber, olefin fiber, rayon fiber, polylactide fiber, lurex fiber, carbon fibers, boron fibers, polyethylene fibers, aromatic polyamide or aramid fibers (e.g., Kevlar^{™}, Twaron^{™}, etc.), polyethylene fibers, polypropylene fibers, recycled polymer fibers, recycled, plastic fibers, and any blend of these materials. In one non-limiting embodiment, 0.5-100 wt.% (and all values and ranges therebetween) of the fiber reinforcement layer is formed of a recycled polymer material (e.g., recycled polyethylene bottles and/or containers, recycled polypropylene bottles and/or containers, etc.; recycled plastic or polymer components from vehicles [e.g., plastic window and windshield trim, etc.]; recycled plastic or polymers from other sources [e.g., plastic agricultural products, consumer bags, plastic from recycled consumer products and appliances, recycles vinyl siding, recycles plastic panels, recycled industrial equipment, etc.]; recycled polyolefin plastics; recycled synthesized plastics; etc.). In one non-limiting configuration, 60-100 wt.% of the reinforcement layer is formed of a recycled polymer material. The reinforcement layer can be secured to the liquid retention layer by a variety of arrangements (e.g., adhesive, melted connection, stitching, staples, rivets, clamp, etc.). The thickness of the reinforcement layer is generally at least 1 mil (e.g., 1-200 mil [(0.001-0.2 in.] and all values and ranges therebetween). The thickness of the reinforcement layer can be the same, greater or less than the thickness of the liquid retention layer. The thickness of the reinforcement layer can be greater than the thickness of the a) the backing and/or intermediate layer, b) the adhesive layer, and/or c) the optional release liner. The reinforcement layer may or mat not be a porous layer.

In another non-limiting aspect of the disclosure, the protective liner can optionally include one or more pre-formed cut lines and/or serrations that enables a user to easily and conveniently cut and/or remove one or more portions of the protective liner so as to customize the size and shape of the protective liner for use in a desired area of a vehicle. In one non-limiting embodiment, the protective liner optionally includes one or more pre-formed cut lines and/or serrations that correspond to specific vehicle models and/or to specific areas within the vehicle, thereby allowing a user to easily and quickly achieve the desired shape of the protective liner for a desired location in a vehicle. The protective liner can optionally include words and/or symbols and/or colors on or near the one or more pre-formed cut lines and/or serrations that provides information to the user as to which one or more pre-formed cut lines and/or serrations pertain to a particular vehicle for customization of the shape and size of the protective liner for such vehicle.

In another non-limiting aspect of the disclosure, the protective liner can optionally include one or more holes or openings that are spaced from an outer peripheral edge of the protective liner, which one or more holes or openings can be used to hang the protective liner and/or to be used with a hanger arrangement that allows for convenient storage and/or cleaning of the protective liner. In one non-limiting embodiment, the protective liner includes two or more holes or openings that are spaced from an outer peripheral edge of the protective liner. The size and shape of the two or more openings can be the same, and/or the spacing of the two or more openings from the top or bottom edge of the protective liner can be the same. In another non-limiting embodiment, there is optionally provided a hanger arrangement in the form of a hook/carrying handle that is configured to be releasably connected to one or more openings in the protective liner. In one non-limiting configuration, the hook/carrying handle includes a body, one or more hook legs connected to the body, and a handle that is connected to the body. Each of the one or more hook legs are configured to releasably connected to one of the openings in the protective liner. In one non-limiting embodiment, each of the hook legs extends forwardly from the body of the hanger arrangement. In another non-limiting configuration, a portion of one or more hook legs has a shape that is configured to pass through an opening in the protective liner. The shape of the openings in the protective liner are non-limiting, thus the shape of the one or more hook legs is also non-limiting. In one non-limiting configuration, the shape of the openings in the protective liner are semi-circular, and a portion of the one or more hook legs that are configured to pass through an opening in the protective liner are also semi-circular. In another non-limiting configuration, the front portion of one or more hook legs includes a front flange that extends upwardly from a body portion of the hook leg. In another non-limiting configuration, the front portion of one or more hook legs includes a bottom moveable latch that is used to releasably secure the protective liner on the hook leg after a portion of the hook leg has been inserted through an opening in the protective liner. The bottom moveable latch, when used, can be movable to a release position when a force is applied to the bottom moveable latch, and when the force is removed from the bottom moveable latch, the bottom moveable latch moves back to the lock position. The bottom moveable flange can optionally include a bottom flange that extends downwardly from a body of the bottom moveable flange. In another non-limiting arrangement, the body of the hanger arrangement includes a rearwardly extending flange that extends above and over a portion of the hook legs. In another non-limiting configuration, the handle has a T-shape configuration.

One non-limiting object is the provision of a protective liner for use as a mat or seat cover or trunk cover or truck bed cover or cargo area cover or cargo bay cover in a vehicle; however, it can be appreciated that the protective liner in accordance with the present disclosure can have other or additional uses (e.g., floor mat in a building, home or other structure, doorway mat in a building, home or other structure, mat for use on a sidewalk, driveway, garage, parking lot, playground, deck, boat surface, counter surface, table surface, etc.).

In another non-limiting object is the provision of a protective liner that is formed of a liquid retention layer having a backing and/or intermediate layer and/or adhesive layer.

In another non-limiting object is the provision of a protective liner that can be configured to enable a user to reposition the protective liner on a surface and/or remove the protective liner from a surface.

In another non-limiting object is the provision of a protective liner that can optionally be customizable for use with various vehicle makes and models and beds of various types of trailers.

In another non-limiting object is the provision of a protective liner that that (a) includes a liquid retention layer, (b) backing and/or intermediate layer and/or adhesive layer, wherein one or both of the backing and/or intermediate layer and/or adhesive layer inhibits or prevents liquids form passing fully through the protective liner, and also optionally allows for securing, repositioning and/or subsequent removal of the protective liner from a surface; (c) is removable without damaging vehicle areas; (d) can optionally be used with existing trays in vehicles to provide additional protection; (e) optionally includes a reinforcement layer, (f) is optionally customizable so as to nearly or completely cover desired areas of specific vehicle models, wherein the protective liner optionally includes pre-formed cut lines that correspond to specific vehicle models and/or to specific areas within the vehicle, thereby allowing a user to easily and quickly achieve their desired protective liner for a desired location in a vehicle; (g) can optionally be used with a releasable hanger arrangement that facilitates in convenient storage of the protective liner and/or easier cleaning of the protective liner; (h) can optionally include pre-formed cut lines that correspond to specific vehicle models and/or to specific areas within the vehicle, and optional instructions thereby allowing a user to easily and quickly achieve the desired shape of the protective liner for a desired location in a vehicle, and/or (i) can optionally include a release liner.

Other objects, advantages, and novel features of the present disclosure will become apparent from the following detailed description of the disclosure.

### BRIEF DESCRIPTION OF THE DRAWINGS

Non-limiting and non-exhaustive embodiments are described with reference to the following drawings, wherein like labels refer to like parts throughout the various views unless otherwise specified. The sizes and relative positions of elements in the drawings are not necessarily drawn to scale. For example, the shapes of various elements are selected, enlarged, and positioned to improve drawing legibility. The particular shapes of the elements as drawn have been selected for ease of recognition in the drawings. Reference may now be made to the drawings, which illustrate various embodiments that the disclosure may take in physical form and in certain parts and arrangement of parts wherein:
FIG. 1 is a front-top isometric view of a non-limiting example implementation of a plurality of protective liners in accordance with the present disclosure that are positioned on an optional hanger arrangement;
FIG. 2 is a front-bottom isometric view of the protective liner of FIG. 1;
FIG. 3 is a front plan view of the plurality of protective liners of FIG. 1.
FIG. 4 is a rear plan view of the plurality of protective liners of FIG. 1;
FIG. 5 is a side view of the plurality of protective liners of FIG. 1;
FIG. 6 is a top plan view of the plurality of protective liners of FIG. 1;
FIG. 7 is a bottom plan view of the plurality of protective liners of FIG. 1;
FIG. 8 is a front-top isometric view of the plurality of protective liners of FIG. 1 that have been removed from the hanger arrangement, and wherein the bottom portion of the plurality of protective liners have been separated from one another;
FIG. 9 is a front-top isometric view of the plurality of protective liners of FIG. 1 that further includes a protective cover over a portion of the plurality of liners;
FIG. 10 is a rear-bottom isometric view of the plurality of protective liners of FIG. 9;
FIG. 11 is a front plan view of a single protective liner of FIG. 1 in accordance with the present disclosure;
FIG. 12 is a back plan view of a single protective liner of FIG. 11;
FIG. 13 is a front-top isometric view of one non-limiting implementation of a hanger arrangement for use with one or more protective liners in accordance with the present disclosure;
FIG. 14 is a front-bottom isometric view of the hanger arrangement of FIG. 13;
FIG. 15 is a top plan view of the hanger arrangement of FIG. 13;
FIG. 16 is a bottom plan view of the hanger arrangement of FIG. 13;
FIG. 17 is a front plan view of the hanger arrangement of FIG. 13;
FIG. 18 is back plan view of the hanger arrangement of FIG. 13;
FIG. 19 is a side view of the hanger arrangement of FIG. 13;
FIG. 20 is an opposite side view of the hanger arrangement of FIG. 13;
FIGS. 21-22 are a bottom plans view of another non-limiting implementation of a protective liner in accordance with the present disclosure, and wherein the bottom of the protective liner includes one or more exemplary cut-lines or perforations and optional instructions that can be used to aid in cutting or forming the protective liner to the desired shape for a specific location;
FIG. 23 is a front-top isometric view of a performed floor mat for a vehicle, and a non-limiting implementation of a protective liner in accordance with the present disclosure that has been cut to fit onto the top surface of the performed floor mat;
FIG. 24 is a front-top isometric view of a performed floor mat of FIG. 23 and the protective liner of FIG. 23 being placed on portion of the top surface of the performed floor mat;
FIG. 25 is a cross-sectional depiction of one non-limiting protective liner in accordance with the present disclosure having a construction that includes a liquid retention layer, a non-porous adhesive layer, and an optional release liner;
FIG. 26 is a cross-sectional depiction of another non-limiting protective liner in accordance with the present disclosure having a construction that includes a liquid retention layer, a backing and/or intermediate layer that may or may not be non-porous, an adhesive layer that may or may not be porous, and an optional release liner; and
FIG. 27 is a cross-sectional depiction of another non-limiting protective liner in accordance with the present disclosure having a construction that includes a liquid retention layer, a reinforcement layer that may or may not be non-porous, a backing and/or intermediate layer that may or may not be non-porous, an adhesive layer that may or may not be porous, and an optional release liner.

### DESCRIPTION OF NON-LIMITING EMBODIMENTS

A more complete understanding of the articles/devices, processes and components disclosed herein can be obtained by reference to the accompanying drawings. These figures are merely schematic representations based on convenience and the ease of demonstrating the present disclosure, and are, therefore, not intended to indicate relative size and dimensions of the devices or components thereof and/or to define or limit the scope of the exemplary embodiments.

Although specific terms are used in the following description for the sake of clarity, these terms are intended to refer only to the particular structure of the embodiments selected for illustration in the drawings and are not intended to define or limit the scope of the disclosure. In the drawings and the following description below, it is to be understood that like numeric designations refer to components of like function.

The singular forms "a," "an," and "the" include plural referents unless the context clearly dictates otherwise.

As used in the specification and in the claims, the term "comprising" may include the embodiments "consisting of" and "consisting essentially of." The terms "comprise(s)," "include(s)," "having," "has," "can," "contain(s)," and variants thereof, as used herein, are intended to be open-ended transitional phrases, terms, or words that require the presence of the named ingredients/steps and permit the presence of other ingredients/steps. However, such description should be construed as also describing compositions or processes as "consisting of" and "consisting essentially of" the enumerated ingredients/steps, which allows the presence of only the named ingredients/steps, along with any unavoidable impurities that might result therefrom, and excludes other ingredients/steps.

Numerical values in the specification and claims of this application should be understood to include numerical values which are the same when reduced to the same number of significant figures and numerical values which differ from the stated value by less than the experimental error of conventional measurement technique of the type described in the present application to determine the value.

The terms "about" and "approximately" can be used to include any numerical value that can vary without changing the basic function of that value. When used with a range, "about" and "approximately" also disclose the range defined by the absolute values of the two endpoints, e.g., "about 2 to about 4" also discloses the range "from 2 to 4." Generally, the terms "about" and "approximately" may refer to plus or minus 10% of the indicated number.

Percentages of elements should be assumed to be percent by weight of the stated element, unless expressly stated otherwise.

The present disclosure provides new and improved protective liners 100 and/or inserts for vehicles (e.g. automobile, truck, golf-cart, four-wheeler, snowmobile, motorcycle, boat, kayak, or any suitable vehicle) that can be replaceable and can be removed from various vehicle areas without damaging or leaving residue on existing surfaces. The protective liners 100 in accordance with the present disclosure can optionally be cut or formed from a sheet having pre-formed cut lines/perforations to quickly adapt the protective liner 100 to cover specific areas of various vehicle makes and models. It can be appreciated that the protective liner 100 in accordance with the present disclosure can have other or additional uses (e.g., floor mat in a building, home or other structure, doorway mat in a building, home or other structure, mat for use on a sidewalk, driveway, garage, parking lot, playground, deck, boat surface, counter surface, table surface, etc.).

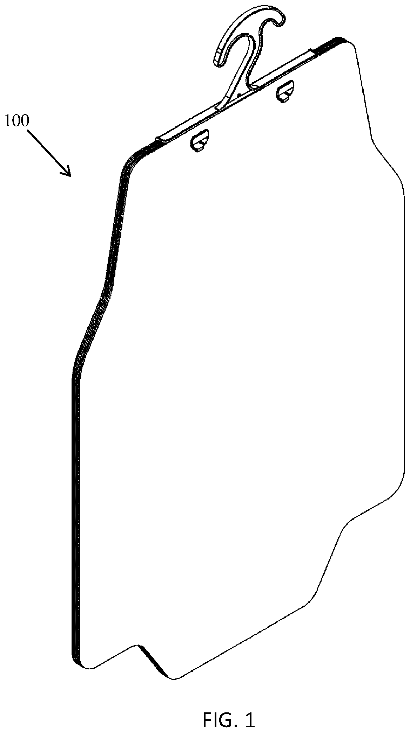

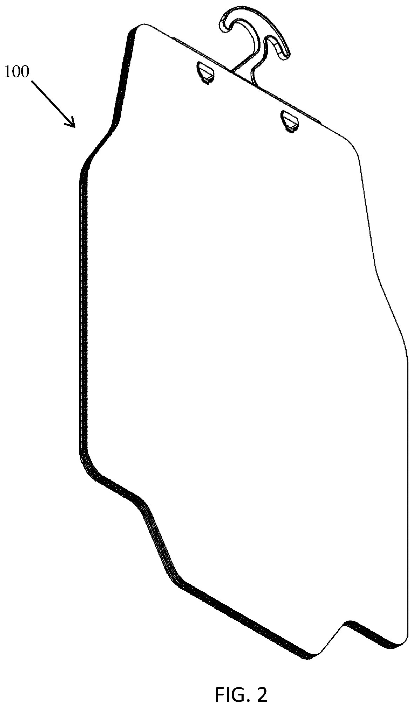

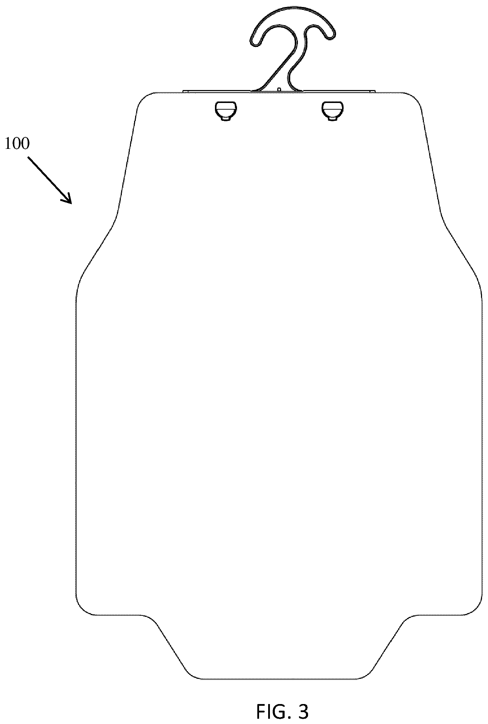

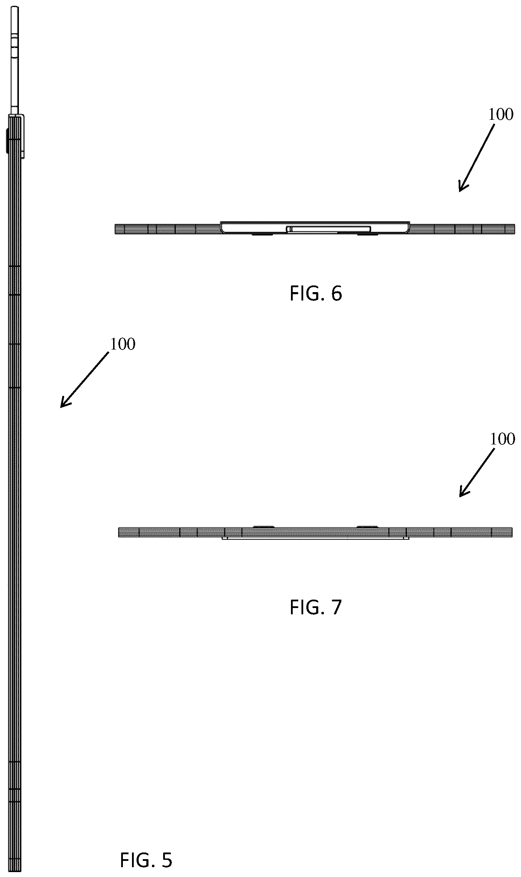

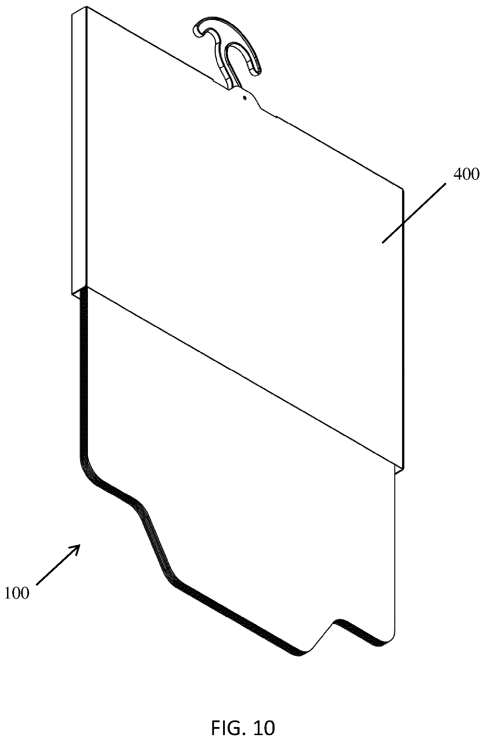

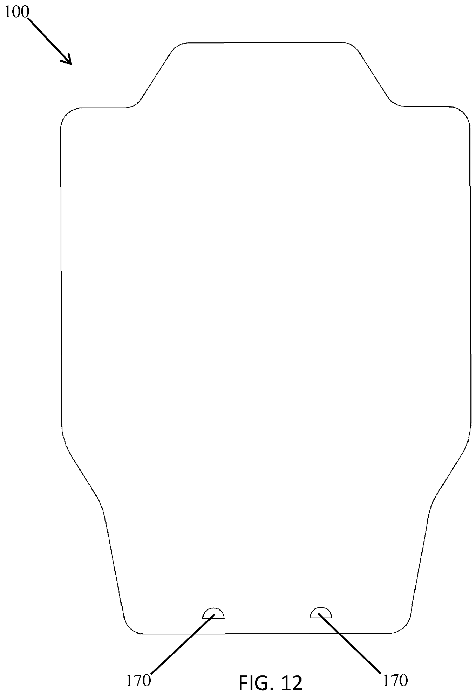

With reference to FIGS. 1-12 and 21-24, there is illustrated an exemplary protective liner 100 that (a) includes a liquid retention layer 110, (b) a backing and/or intermediate layer 120 and/or adhesive layer 130, wherein one or both of the backing and/or intermediate layer and/or adhesive layer inhibits or prevents liquids form passing fully through the protective liner, and also optionally allows for securing, repositioning and/or subsequent removal of the protective liner from a surface; (c) is removable without damaging vehicle areas; (d) can optionally be used with existing trays in vehicles to provide additional protection; (e) optionally includes a reinforcement layer 140, (f) is optionally customizable so as to nearly or completely cover desired areas of specific vehicle models, wherein the protective liner optionally includes pre-formed cut lines that correspond to specific vehicle models and/or to specific areas within the vehicle, thereby allowing a user to easily and quickly achieve their desired protective liner for a desired location in a vehicle; (g) can optionally be used with a releasable hanger arrangement 300 that facilitates in convenient storage of the protective liner 100 and/or easier cleaning of the protective liner 100; (h) can optionally include pre-formed cut lines 160 that correspond to specific vehicle models and/or to specific areas within the vehicle, and optional instructions thereby allowing a user to easily and quickly achieve the desired shape of the protective liner 100 for a desired location in a vehicle, and/or (i) can optionally include a release liner 150. In another non-limiting embodiment, the lines/perforations/scores 160 can correspond to a) a driver side front seat floor plan, b) a passenger side front seat floor plan, c) a driver side rear seat floor plan, d) a passenger side rear seat floor plan, e) a driver side front seat cover, f) a passenger side front seat cover, g) a rear seat cover, h) a truck bed cover, i) a cargo bay cover, j) a truck bed cover, k) a trailer bed cover, etc. As can be appreciated, information about the lines/perforations/scores can also or alternatively a) be provided on a printed sheet that can be used to overlay the liner when cutting the liner, b) be download online and optionally printed out. In another non-limiting embodiment, the lines/perforations/scores 160 can be pre-formed to correspond to specific vehicle makes and models.

The shape and size of the protective liner 100 are non-limiting. As illustrated in FIGS. 1-4, 11 and 12, the protective liner 100 has a plurality of widths along a longitudinal length of the protective liner 100. Both the top and bottom end portions of the protective liner 100 have a narrower width than the maximum width of the protective liner 100 that is located at or near the central region of the protective liner 100. The maximum longitudinal length of the protective line 100 can be greater than the maximum width of the protective liner 100; however, this is not required.

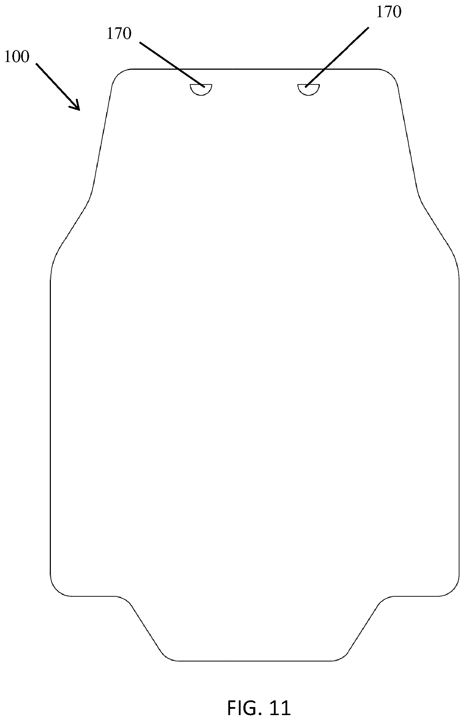

The top portion of the protective liner 100 can optionally include one or more openings 170 that are spaced from the peripheral edge of the protective liner 100. As illustrated in FIGS. 11-12, the shape and size of openings 170 are the same; however, this is not required. In one non-limiting configuration, the shape of the openings 170 is semi-circular, and wherein the flat side of the opening is positioned closer to the top edge of the protective liner 100; however, other shapes can be used (e.g., circular, oval, polygonal, etc.). The position of the two openings 170 is spaced equally from the top edge of the protective liner 100; however, this is not required. Generally, the openings are spaced closer to the top edge than to the bottom edge of the protective liner 100, and are generally spaced from the top edge of the protective liner 100 a distance of 0.1-25% (and all values and ranges therebetween) of the maximum longitudinal length of the protective liner 100. When two or more openings 170 are formed in the protective liner 100, such openings 170 are generally spaced from one another. The maximum width or diameter of each of the openings is generally 0.0001-20% (and all values and ranges therebetween) of the maximum width of the protective liner 100. The maximum height of each of the openings is generally 0.00001-10% (and all values and ranges therebetween) of the maximum longitudinal length of the protective liner 100.

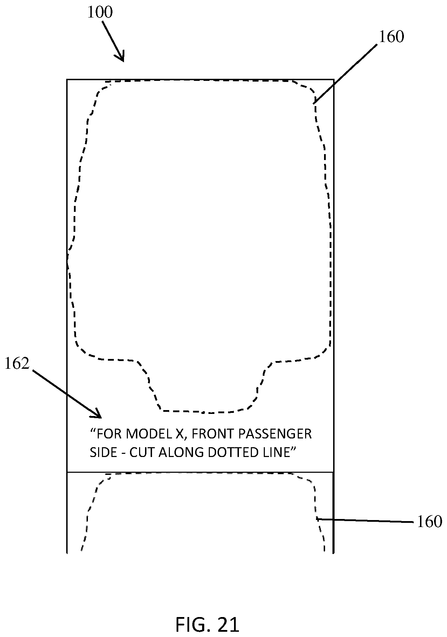

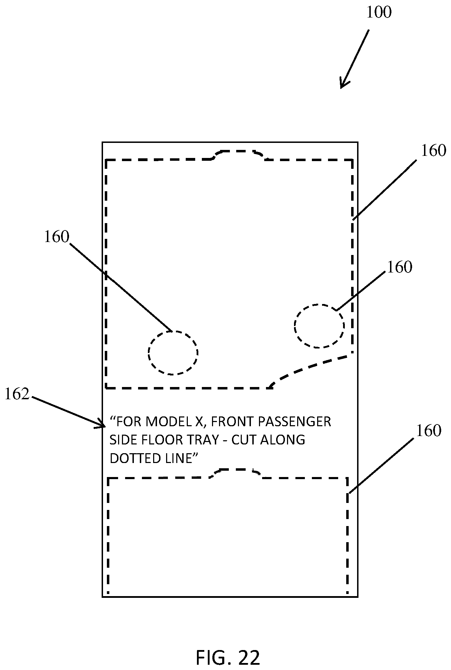

Referring now to FIGS. 21-22, the protective liner 100 can optionally include can optionally include pre-formed cut lines 160 and/or preformed serrations that correspond to specific vehicle models and/or to specific areas within the vehicle. The protective liner 100 can also optionally include instructions 162 to thereby provide instructions to enable a user to easily and quickly achieve the desired shape of the protective liner 100. The pre-formed cut lines 160 and/or preformed serrations can be used to partially or fully obtain an outer perimeter shape of the protective liner 100 (See FIG. 21), and/or be used to form inner shape (e.g., form one or more openings in the body of the protective liner, etc.) that are spaced from the perimeter of the protective liner 100. (See FIG. 22). As can be appreciated, the top and/or bottom surface of the protective liner 100 can include marketing information, trademarks, logos, branding, etc.

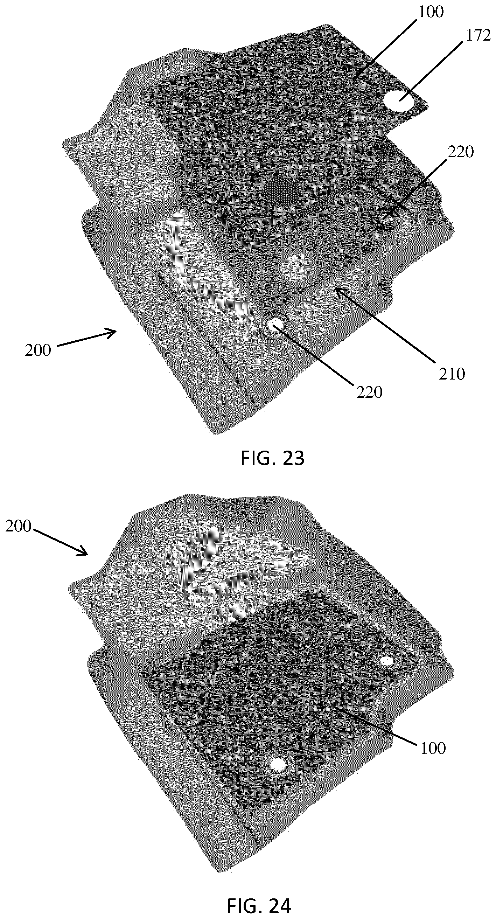

Referring now to FIGS. 21-24, the use of the optional pre-formed cut lines 160 and/or preformed serrations on the protective liner can be used to customize the shape of the protective liner 100 such that the protective liner 100 can fit in a certain location and/or be properly positioned in a certain shaped shape. As illustrated in FIGS. 23-24, the shape of the protective liner 100 has been customized to fit into a certain shaped car liner 200. The car liner 200 can include a cavity 210 wherein a driver places his/her feet during the driving of a vehicle. The cavity 210 can optionally include one or more connection structures 220 that can be used to connect a traditional car mat, etc. to the car liner 200. As illustrated in FIG. 23, the protective liner 100 has been cut or otherwise shaped to conform to the shape of cavity 210. The protective liner 100 has been cut, etc. to form one or more connection openings 172 that are configured to receive one or more connection structures 220 when the protective liner is positioned in the cavity 210 of the car liner 200 as illustrated in FIG. 24. As can be appreciated, when a vehicle does not include a car liner, the protective liner 100 can be positioned directly on the surface wherein a driver generally places his/her feet during the driving of a vehicle, or a location that a passenger generally places his/her feet when in the vehicle. As discussed above, the protective liner 100 can also or alternatively be positioned in in other locations in a vehicle (e.g., truck bed, seat, trunk, truck bed cover, cargo area, cargo bay, etc.).

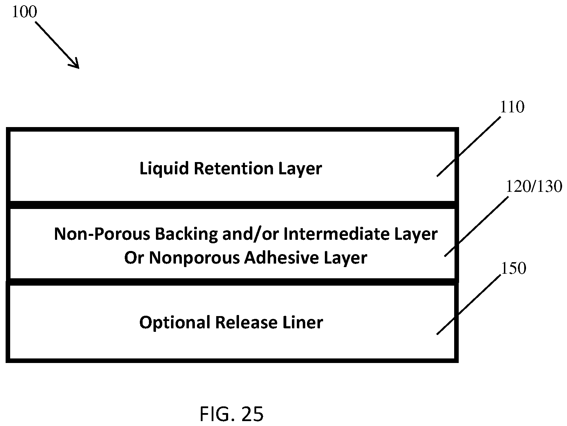

Referring now to FIGS. 25-27, the protective liner is formed of multiple layers of material. The protective liner 100 is also configured so as to inhibit or prevent liquids form fully passing though the protective liner 100.

Referring now to FIG. 25, the protective liner 100 is formed of, from top to bottom, a liquid retention layer 110, a backing and/or intermediate layer 120 or an adhesive layer 130, and an optional release liner 150. The liquid retention layer 110 may or may not include absorbable components. The liquid retention layer 110 can be partially or fully formed of polymer material. Non-limiting polymers that can be used, but are not limited to, include one or more of aramid fibers (e.g., poly-para-phenylene terephthalamide [Kevlar^{®}]), carbon fibers, fiberglass, boron fibers, polyethylene fibers, polypropylene fibers, recycled polymer fibers, polyethylene terephthalate fibers and/or plastic fibers. In one non-limiting formulation, the liquid retention layer 110 is formed of 0.5 - 100% (and all values and ranges therebetween) recycled polymer material. Non-limiting recycled plastics and/or polymers that can be used to partially or fully form the liquid retention layer 110 include, but are not limited to, recycled plastic bottles (e.g., recycled polyethylene bottles and/or containers, recycled polypropylene bottles and/or containers, etc.), recycled plastic or polymer components from vehicles (e.g., plastic window and windshield trim, etc.), recycled plastic or polymers from other sources (e.g., plastic agricultural products, consumer bags, plastic from recycled consumer products and appliances, recycles vinyl siding, recycles plastic panels, recycled industrial equipment, etc.), post-consumer and/or post-industrial recycled PET, recycled polyolefin plastics, recycled synthesized plastics, etc. The liquid retention layer 110 can be partially or fully formed of fibers (e.g., the fibers form 10-100% and all values and ranges therebetween of the liquid retention layer 110). The fibers that are used to partially or fully form the liquid retention layer 110 can be formed of 60-100% (and all values and ranges therebetween) post-consumer and/or post-industrial plastic. The length of the fibers (when used) can have an average length of 1 micron to 30 mm (and all values and ranges therebetween). The fibers, when used, that partially or fully form the liquid retention layer 110 can be formed of one or more materials. The fibers, when used, that partially or fully form the liquid retention layer 110 can be formed of woven and/or non-woven fibers. The liquid retention layer 110 can be partially or fully formed of one or more fiber layers. The thickness of the liquid retention layer 110 can be 0.1-100 mm (and all values and ranges therebetween). The one or more fiber layers that are used to partially or fully form the liquid retention layer 110 form a liquid retention media that may or may not be liquid penetrable. In one non-limiting configuration, the one or more fiber layers that are used to partially or fully form the liquid retention layer 110 form a liquid retention media that allows liquid that is not retained by one or more portions of the liquid retention layer 110 (e.g., retained by one or more absorbent portion of the liquid retention layer 110, etc.) to pass through the non-absorbent portions of the liquid retention layer 110. In one non-limiting configuration, 50-100% (and all values and ranges therebetween) of the liquid that contacts a top surface of the liquid retention layer 110 will fully pass through the liquid retention layer 110 in less than 5 minutes (e.g., 0-4.999 minutes and all values and ranges therebetween).

When the protective liner 100 that includes a backing and/or intermediate layer 120, and not an adhesive layer 130, the backing and/or intermediate layer 120 is generally configured to be non-porous so as to inhibit or prevent liquids from fully passing through the protective liner 100. When the protective liner 100 includes an adhesive layer 130 and is absent a backing and/or intermediate layer 120, the adhesive layer 130 is generally configured to be non-porous so as to inhibit or prevent liquids from fully passing through the protective liner 100. When the protective liner 100 includes both a backing and/or intermediate layer 120 and an adhesive layer 130, the backing and/or intermediate layer 120 and/or the adhesive layer 130 is generally configured to be non-porous so as to inhibit or prevent liquids from fully passing through the protective liner 100.

When the protective liner 100 includes a backing and/or intermediate layer 120, and not an adhesive layer 130 or a reinforcement layer 140, the backing and/or intermediate layer 120 is generally connected to the bottom surface of the liquid retention layer 110. When the protective liner 100 includes a reinforcement layer 140, the backing and/or intermediate layer 120 can a) be connected to the bottom surface of the liquid retention layer 110, or b) be connected to the bottom surface of the reinforcement layer 140. The thickness of the backing and/or intermediate layer can be less than the thickness of the liquid retention layer. The backing and/or intermediate layer 120 can be formed of one or more layers of material. In one non-limiting configuration, the backing and/or intermediate layer can include one or more polymers (e.g., acrylate polymer, natural rubber, synthetic thermoplastic elastomer, silicone rubber, etc.). In one non-limiting configuration, the backing and/or intermediate layer 120 can be formed of a sheet or film of polymer material that is non-porous. In such a configuration, the backing and/or intermediate layer 120 is configured to inhibit or prevent liquid from passing through the backing and/or intermediate layer 120 and to ensure that liquids that have passed into the liquid retention layer 110 via the top surface of the liquid retention layer 110 are retained in the liquid retention layer 110 until the liquid retention layer 110 is fully saturated. As such, the backing and/or intermediate layer 120 inhibits or prevents liquids from fully penetrating through the protective liner 100, thereby inhibiting or preventing the damage to the integrity of the adhesive layer 130 of the protective liner 100, thus inhibiting or preventing a deterioration or degradation of the connection between the adhesive layer 130 and a surface (e.g., vehicle surface, etc.), and/or inhibiting or preventing damage to a vehicle surface located under the protective liner 100 that could be cause by liquid passing through the protective 100 and penetrating into the carpet or other surfaces of the vehicle.

The backing and/or intermediate layer can be a preformed layer that is connected to the bottom surface of the liquid retention layer or bottom of an optional reinforcement layer by various arrangements (e.g., adhesive, melted connection, stitching, staples, rivets, clamp, etc.). The backing and/or intermediate layer can optionally include 0-50 wt.% fibers. In another non-limiting configuration, the composition of the backing and/or intermediate layer is different from the composition of the liquid retention layer. The top and/or bottom surface of the backing and/or intermediate layer 120, and/or intermediate portion of the backing and/or intermediate layer 120 can include a polymer layer (e.g., liquid applied polymer layer, preformed polymer layer), which polymer layer is non-porous so as to inhibit or prevent liquid from fully passing through the backing and/or intermediate layer 120.

When the protective liner 100 includes an adhesive layer 130, and the protective liner 100 does not include a backing and/or intermediate layer 120 or a reinforcement layer 140, the adhesive layer 130 is generally connected or applied to the bottom surface of the liquid retention layer 110. When the protective liner 100 includes a backing and/or intermediate layer 120, the adhesive layer 130 can a) be connected or applied between the bottom surface of the liquid retention layer 110 and the backing and/or intermediate layer 120, and/or b) be connected or applied to the bottom surface of the backing and/or intermediate layer 120. When the protective liner 100 includes a reinforcement layer 140, the adhesive layer 130 can a) be connected or applied between the bottom surface of the liquid retention layer 110 and the reinforcement layer 140, and/or b) be connected or applied to the bottom surface of the reinforcement layer 140. When the protective liner 100 includes a reinforcement layer 140 and a backing and/or intermediate layer 120, the adhesive layer 130 can a) be connected or applied between the bottom surface of the liquid retention layer 110 and the reinforcement layer 140, b) be connected or applied between the bottom surface of the liquid retention layer 110 and the backing and/or intermediate layer 120, c) be connected or applied between the reinforcement layer 140 and the backing and/or intermediate layer 120, d) be connected or applied to the bottom surface of the reinforcement layer 140, and/or e) be connected or applied to the bottom surface backing and/or intermediate layer 120. The adhesive layer 130, when used, can be used to a) facilitate in securing the backing and/or intermediate layer to the liquid retention layer, b) facilitate in securing an optional reinforcement layer to the liquid retention layer and/or the backing and/or intermediate layer, and/or c) facilitate in securing (e.g., permanently or releasably securing) the protective liner to a surface (e.g., floor, interior portion of a vehicle, floor mat of a vehicle, truck bed, truck, etc.). In one non-limiting configuration, the adhesive layer 130 is a non-porous layer. The adhesive layer 130, when applied as a bottom layer to the protective liner 100, can be used to form a releasable connection between the protective liner 100 and a surface. In one non-limiting formulation, the adhesive layer 130 is or includes a high-temperature aqueous pressure-sensitive adhesive. In another non-limiting formulation, the pressure-sensitive adhesive has a softening point of 140-240°F (and all values and ranges therebetween). In another non-limiting embodiment, the adhesive layer is formed of a different material from the material used to form the liquid retention layer, the optional reinforcement layer, and/or the backing and/or intermediate layer when the adhesive layer does not form the backing and/or intermediate layer.

When the protective liner 100 includes a release liner 150, the release liner is applied to the bottom layer of the protective liner 100 (e.g., adhesive layer 130, backing and/or intermediate layer 120, or reinforcement layer 140). In one non-limiting configuration, the release liner 150 is releasably connected to the bottom surface of the adhesive layer 130. The release liner 150, when used, can be formed of a paper (e.g., kraft paper, super calendared kraft paper, clay-coated kraft paper, polymer-coated kraft paper, glazed paper, etc.) or a polymeric film (e.g., PET film, polypropylene film, polyolefins film, polyethylene films, PP films, etc.), or a paper that is coated with a polymeric film.

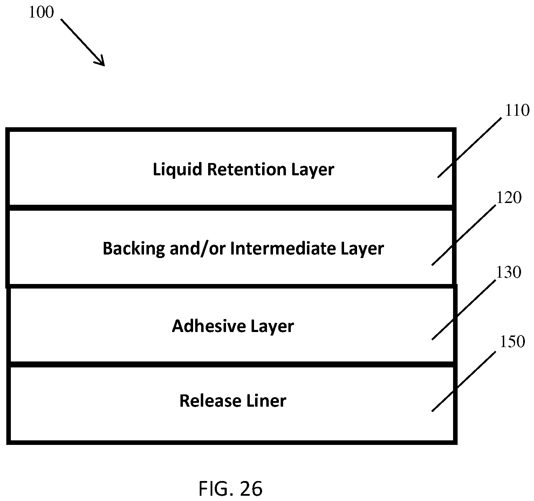

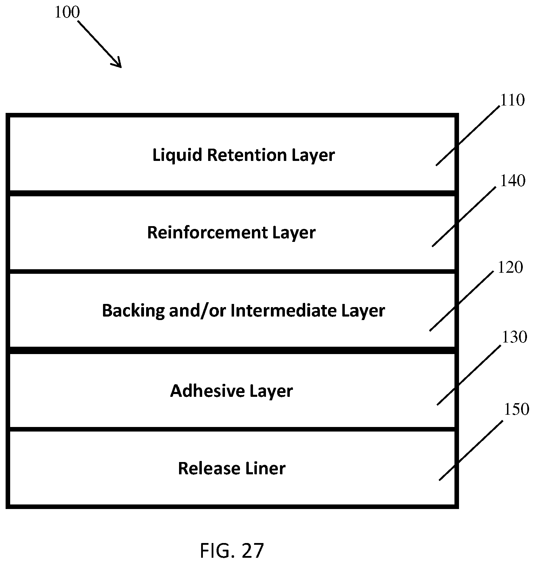

Referring now to FIGS. 26-27, alternative non-limiting layer configurations of the protective liner 100 are illustrated. As illustrated in FIG. 26, the protective liner 100 is formed of, from top to bottom, a liquid retention layer 110, a backing and/or intermediate layer 120, an adhesive layer 130, and an optional release liner 150. As illustrated in FIG. 27, the protective liner 100 is formed of, from top to bottom, a liquid retention layer 110, a reinforcement layer 140, a backing and/or intermediate layer 120, an adhesive layer 130, and an optional release liner 150.

In one non-limiting configuration, the top surface of the liquid retention layer 110 can optionally be a non-slip top surface.

The protective liner 100 can be offered as a pre-rolled, packaged, sheet configuration, wherein the protective liner 100 can be cut or formed into a desired shape from the sheet. Alternatively, the protective liner 100 can be provided in one or more precut configurations as illustrated in FIGS. 1-4 and 8-12.

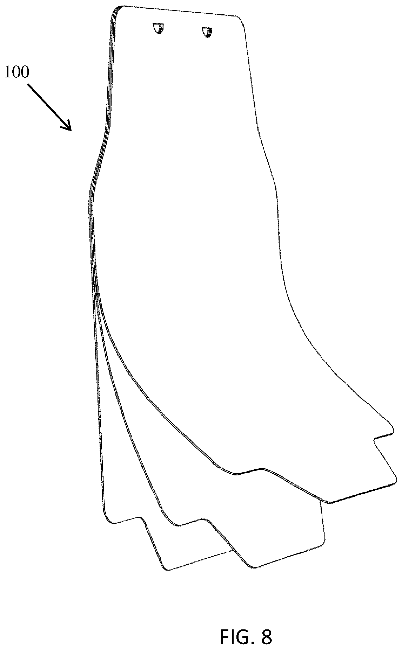

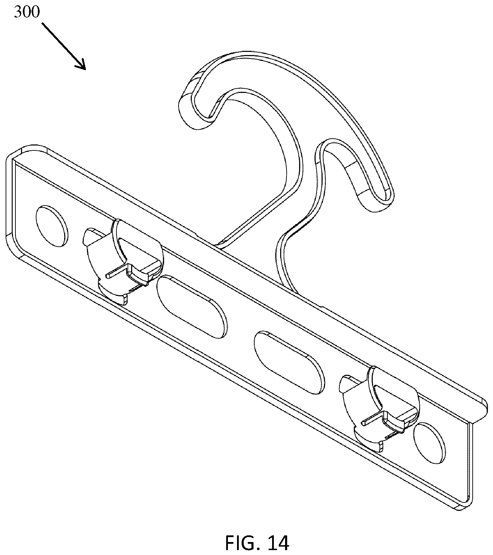

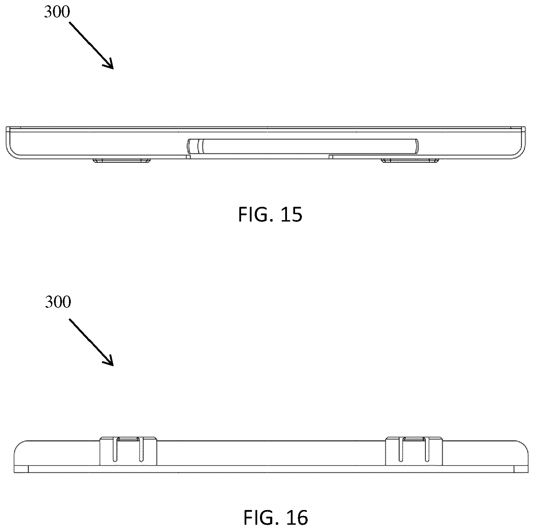

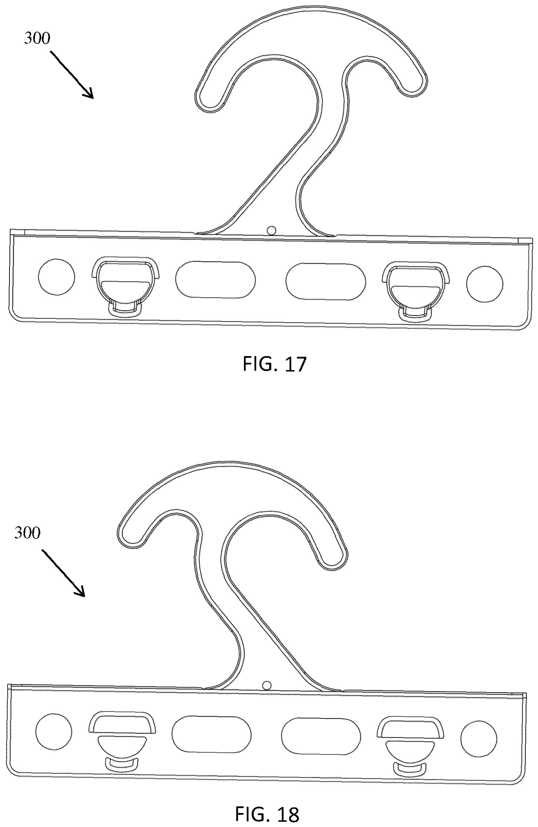

Referring now to FIGS. 1-10 and 13-20, there is illustrated a plurality of protective liners 100 that are releasably connected to a hanger arrangement 300. As illustrated in FIG. 8, the pack of protective liners 100 on hanger arrangement 300 includes three protective liner 100; however, it will be appreciated that more than three or less than three protective liners 100 can be releasably connected to the hanger arrangement 300.

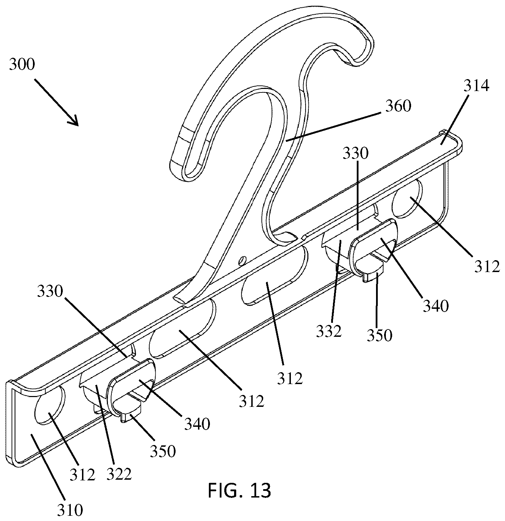

Referring now to FIGS. 13-20, a non-limiting configuration of a hanger arrangement 300 is illustrated. The hanger arrangement 300 in the form of a hook/carrying handle that is configured to be releasably connected to one or more openings 170 in the protective liner 100. The material used to form the hanger arrangement 300 is non-limiting (e.g., plastic, metal, wood, etc.). The size of the hanger arrangement 300 is non-limiting. In one non-limiting configuration, hanger arrangement 300 includes a body 310, one or more hook legs 320 that are connected to the body 310, and a handle 360 that is connected to the body 310.

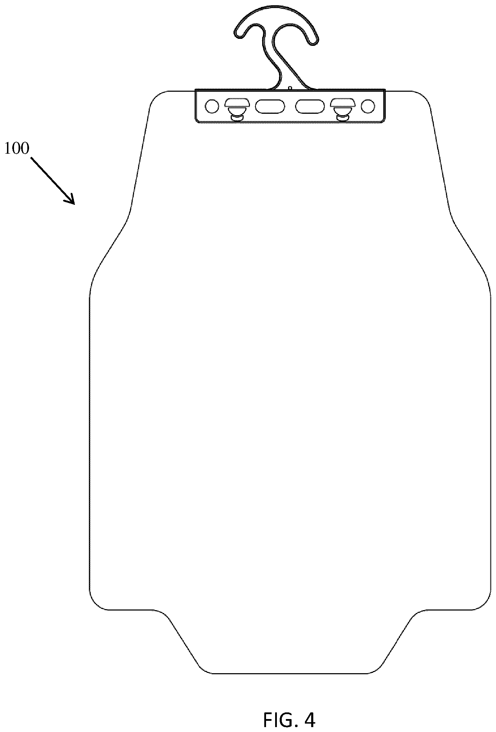

The body 310 is illustrated has having a generally rectangular shape; however, this is not required. In one non-limiting configuration, the body 310 has a length that is less than a width of a top portion of the protective liner as illustrated in FIG. 4. The body can optionally include one or more openings 312 that are used to reduce the material used to form the hanger arrangement 300 and/or the weight of the hanger arrangement 300. The body 310 optionally includes a top flange 314 that is formed on the top portion of the body 310 extends forwardly from a front face 316 of the body 310.

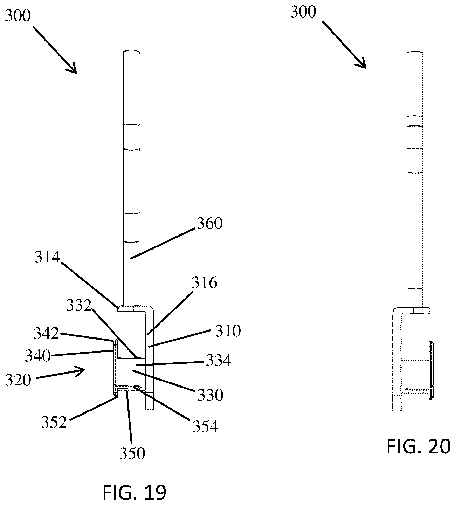

Two hook legs 320 are illustrated as extending forwardly from a front face of the body 310. Each of the hook legs 320 is positioned below top flange 314. In one non-limiting configuration, each of the hook legs 320 is optionally positioned above a bottom edge of the body 310. Each hook leg 320 is formed of a leg body 330, a leg flange 340, and a leg latch 350. In one non-limiting configuration, the leg body 330 extends forwardly from the front face 316 of the body 310 a distance that is equal to or greater than a forward distance of the top flange 314 from the front face of the body 310 as illustrated in FIGS. 19-20. The top surface 332 of the leg body 330 can be generally flat. The side walls 334 of the leg body 330 can be curved or flat. As illustrated in FIGS. 13-20, the side walls 334 of the leg body 330 have a quarter-circle or quadrant so that the leg body 330 has a generally semi-circular shape profile. As can be appreciated, the leg body 330 can have other shapes. A portion of the leg flange 340 is positioned at or near the front-top edge of the leg body 330 and a top portion 342 of the leg flange 340 extends upwardly from the top surface 332 of the leg body 330. The distance that the leg flange 340 extends upwardly from the top surface 332 of the leg body 330 is generally less than the distance between the lower surface of the top flange 314 and the top surface 332 of the leg body 330 as illustrated in FIGS. 19-20. In one non-limiting embodiment, the spacing between the top edge the top portion 342 of the leg flange 340 and the lower surface of the top flange 314 is equal to or greater than a spacing between a top edge of opening 170 and a top edge of the protective liner 100.

The leg latch 350 is located on the bottom portion of the leg body 330. The leg latch 350 includes a latch flange 352 that extends downwardly from a location that is at or near the bottom front surface of the leg latch 350 as illustrated in FIGS. 19-20. The height of the latch flange 352 is typically less than the height of the portion of the leg flange 340 that extends upwardly from the top surface 332 of the leg body 330 as illustrated in FIGS. 19-20. In one non-limiting arrangement, the leg latch 350 is connected to the bottom portion of the leg body 330 by a latch living hinge 354. The leg latch 350 is configured to move upwardly about the latch living hinge 354 when an upward force is applied to the leg latch 350. As illustrated in FIG. 13, the bottom portion of the leg flange 340 terminates above the bottom portion of the leg body 330 so that there is space between the front end of the latch living hinge 354 and the bottom portion of the leg body 330. Such space allows the front portion of the leg latch 350 to be raised up and into a portion of the interior of the leg body 330 when an upward force is applied to the leg latch 350. In one non-limiting configuration, the leg body 330 and leg latch are configured such that the front portion of the leg latch 350 can be lifted into a portion of the leg body 330 such that the bottom portion of the latch flange 352 can move near, or even with or above the bottom of the leg body 330. The leg latch 350 can also be configured that when the upward force is removed from the leg latch 350, the bottom portion of the leg latch 350 automatically moves back to its original position as illustrated in FIGS. 19-20.

Each of the one or more hook legs 320 are configured to releasably connected to one of the openings 170 in the protective liner 110. In one non-limiting embodiment, the shape of the top portion of the leg flange 340 that is located above the top surface 332 of the leg body 330 in combination with the shape of the leg body located below the top surface 332 of the leg body 330 form a combined shape that has a shape and size that can fit through the openings 170 of the protective liner 110. As illustrated in FIG. 11, the shape of the openings 170 of the protective liner 110 is semi-circular. Likewise, the shape of the top portion of the leg flange 340 that is located above the top surface 332 of the leg body 330 in combination with the shape of the leg body located below the top surface 332 of the leg body 330 form a combined shape that is also semi-circular which size is the same or less than the semi-circular openings 170 such that each the hook leg 330 can pass through an opening 170 in the protective liner 110. The leg latch 350 can configured such that before the hook leg 330 can pass through an opening 170 in the protective liner 110, the leg latch 350 needs to be raised. Once the opening 170 in the protective liner 110 pass about the raised leg latch 350, the leg latch 350 can be allowed to lower to its original position to releasably secure the protective liner 110 on the hook legs 320. As illustrated in FIGS. 19-20, the top surface 332 of the leg body 330 is located below the top edge of the top portion 342 of the leg flange 340. As such, when the opening 170 in the protective liner 110 passes over the top portion 342 of the leg flange 340, the protective liner can be lowered on to the leg body 330 such that the top edge of the opening 170 rests on the top surface 332 of the leg body 330, thereby resulting the region of the protective liner 110 that is located above the top edge of opening 170 is trapped between the front face 316 of the body 330 and a portion of the rear face of the leg flange 340 so as to releasably secure the protective liner 110 on the hook legs 320. When the protective liner 110 is to be removed from the hook legs 320, the protective liner 110 is lifted off of the top surface 332 of the leg body 330 and over the top portion 342 of the leg flange 340 while the leg latch 350 is in the raised position.

Referring now to FIGS. 13-14, the handle 360 has general T-shape configuration, however, other shapes can be used. The T-shape configuration of the handle 360 allows a user to conveniently carry the one or more protective liners 110, and/or to hang the one or more protective liners 110 for storage or cleaning. As illustrated in FIGS. 19-20, the handle 360 is connected to the top surface of the top flange 314; however, it can be appreciated, that the handle can be connected to the top of the top flange 314 and/or top of the body 310.

In one non-limiting configuration, the handing arrangement 300 is formed of a single piece of material (e.g., plastic material, etc.).

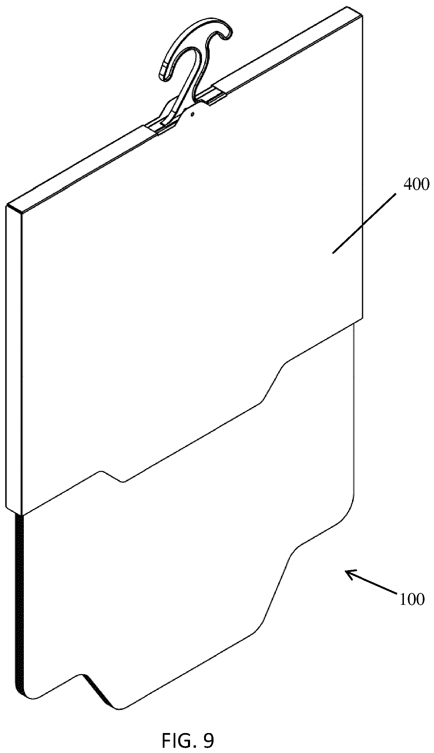

Referring now to FIGS. 9-10, a protective sleeve 400 can be releasably positioned over a portion of the handing arrangement 300 and portion of the protective liner 110 to protect the protective liner 110 while the protective liner 110 is positioned on the hanging arrangement 300. The top of the protective sleeve 400 can include a sleeve opening 410 that enable the handle 360 to pass through the sleeve opening when the protective sleeve 400 is positioned over a portion of the handing arrangement 300 and portion of the protective liner 110. The protective sleeve 400 includes a sleeve cavity that receives a portion of the protective liner 100 when the protective sleeve 400 is positioned over a portion of the handing arrangement 300 and portion of the protective liner 110. The material used to form the protective sleeve is non-limiting (e.g., paper, cardboard, fiber board, plastic, etc. The protective sleeve 400 can optionally be configured to be reusable.

Reference throughout the specification to "various embodiments," "some embodiments," "one embodiment," "some example embodiments," "one example embodiment," or "an embodiment" means that a particular feature, structure, or characteristic described in connection with any embodiment is included in at least one embodiment. Thus, appearances of the phrases "in various embodiments," "in some embodiments," "in one embodiment," "some example embodiments," "one example embodiment, or "in an embodiment" in places throughout the specification are not necessarily all referring to the same embodiment. Furthermore, the particular features, structures or characteristics may be combined in any suitable manner in one or more embodiments.

It will thus be seen that the objects set forth above, among those made apparent from the preceding description, are efficiently attained, and since certain changes may be made in the constructions set forth without departing from the spirit and scope of the disclosure, it is intended that all matter contained in the above description and shown in the accompanying drawings shall be interpreted as illustrative and not in a limiting sense. The disclosure has been described with reference to preferred and alternate embodiments. Modifications and alterations will become apparent to those skilled in the art upon reading and understanding the detailed discussion of the disclosure provided herein. This disclosure is intended to include all such modifications and alterations insofar as they come within the scope of the present disclosure. It is also to be understood that the following claims are intended to cover all of the generic and specific features of the disclosure herein described and all statements of the scope of the disclosure, which, as a matter of language, might be said to fall there between. The disclosure has been described with reference to the certain embodiments. These and other modifications of the disclosure will be obvious from the disclosure herein, whereby the foregoing descriptive matter is to be interpreted merely as illustrative of the disclosure and not as a limitation. It is intended to include all such modifications and alterations insofar as they come within the scope of the appended claims.

### Reference numbers:

- 100: protective liner
- 110: liquid retention layer
- 120: backing/intermediate layer
- 130: adhesive layer
- 140: reinforcement layer
- 150: release liner
- 160: pre-formed cut lines
- 162: instruction
- 170: opening
- 172: connection openings
- 200: car liner
- 210: cavity
- 220: connection structures
- 300: hanger arrangement
- 310: body
- 312: opening
- 314: top flange
- 320: hook legs
- 330: leg body
- 332: top surface
- 334: side walls
- 340: leg flange
- 342: top portion
- 350: leg latch
- 352: latch flange
- 354: living hinge
- 360: handle
- 400: protective sleeve
- 410: sleeve opening

## Claims

1. A protective liner (100) that is configured to be removably connectable to a surface; said protective liner (100) includes a liquid retention layer (110) and a non-porous backing system; said liquid retention layer (110) is at least partially formed of a porous material; said non-porous backing system is less porous than said liquid retention layer; said non-porous backing system is formed of different materials from said liquid retention layer (110); said non-porous backing system has a thickness that is less than a thickness of said liquid retention layer (110); said liquid retention layer (110) includes a plurality of fibers; said non-porous backing system includes 0-50 wt.% fibers; a fiber content in said liquid retention layer (110) is greater than a fiber content in said non-porous backing system; said non-porous backing system connected to a bottom surface of said liquid retention layer (110); said non-porous backing system includes one or more layers selected from the group consisting of a) a reinforcement layer (140), b) an adhesive layer (130), and c) a backing layer (120).

2. The protective liner as defined in claim 1, wherein said liquid retention material includes a) a plurality of fibers that are formed of polymer material, and wherein said polymer material includes one or more of aramid fibers, carbon fibers, fiberglass, boron fibers, polyethylene fibers, polypropylene fibers, recycled polymer fibers, polyethylene terephthalate fibers and/or plastic fibers, b) plurality of fibers that are formed of 60-100% recycled polymer material, c) a plurality of non-woven polymer fibers, and wherein said non-woven polymer fibers have average length of 1 micron to 30 mm; and/or d) a thickness of 0.1-20 mm.

3. The protective liner as defined in claim 1 or 2, wherein said non-porous backing system a) forms a water impenetrable barrier, b) includes said adhesive layer (130), and wherein said adhesive layer (130) is formulated to enable a user to i) releasably secure said protective liner to the surface, ii) reposition said protective liner (100) on the surface without damaging the surface, and/or iii) remove said protective liner (100) from the surface without damaging the surface, c) includes said backing layer (120) and said adhesive layer (130), and wherein said adhesive layer (130) is positioned on a bottom surface of said backing layer (120), and wherein said backing layer (120) a nonporous layer, and wherein said backing layer (120) is formed of a polymer material, or d) includes said reinforcement layer (140) and said backing layer (120), and wherein said reinforcement layer (140) is located between said liquid retention layer (110) and said backing layer (120), and wherein a thickness of said reinforcement layer (140) is greater than a thickness of said backing layer (120), and wherein said reinforcement layer (140) is not a non-woven layer, and wherein said reinforcement layer (140) is formed of a different material from said liquid retention layer (110).

4. The protective liner as defined in claim 3, wherein said adhesive layer (130) includes a high-temperature polymer that has a softening point of 140-240°F (60°C-115°C); said high-temperature polymer is a pressure-sensitive adhesive.

5. The protective liner as defined in any one of claims 1-4, wherein said backing layer (120) is applied to a bottom of said liquid retention layer (110) or a bottom of a reinforcement layer (140).

6. The protective liner as defined in any one of claims 1-5, wherein a bottom surface of said adhesive layer (130) includes a release liner (150); said release liner (150) includes paper or a polymeric film; a thickness of said release liner (150) is 0.2-50 mil (0.005-1.27mm).

7. The protective liner as defined in and one of claims 1-6, further including one or more pre-formed cut lines (160) and/or serrations that are configured to enable a user to cut and/or remove one or more portions of said protective liner so as to customize a size and shape of said protective liner (100) for use in a desired area of a vehicle.

8. The protective liner as defined in any one of claims 1-7, further including one or more openings (170) that are spaced apart and are spaced from an outer peripheral edge of said protective liner (100); said one or more openings (170) are configured to releasably connect to a hanger arrangement (300); said hanger arrangement (300) includes a body (310), one or more hook legs (320) that are connected to said body (310), and a handle (360) that is connected to said body (310); each of said one or more hook legs (320) are configured to be releasably connected to one of said openings (170) in said protective liner (100).

9. The protective liner as defined in claim 8, wherein a) said body (310) of said hanger arrangement (300) includes one or more features selected from the group consisting of i) said body (310) has rectangular shape, ii) said body (310) has a length that is less than a width of a top portion of said protective liner (100), iii) said body (310) include one or more openings that are spaced from a peripheral edge of said body (310) and are spaced from said one or more hook legs (320), and/or iv) said body (310) includes a top flange (314) that is formed on a top portion (342) of said body (310) extends forwardly from a front face of said body (310); and/or b) each of said hook legs (320) extend forwardly from a front face of said body (310), and wherein each of said hook legs (320) is positioned below a top edge of said body (310) or below said top flange (314), and wherein each of said hook legs (320) includes a leg body (330), a leg flange (340), and a leg latch (350), and wherein said leg body (330) extends forwardly from said front face of said body (310), and wherein a portion of said leg flange (340) is positioned at or near a front-top edge of said leg body (310) and a top portion of said leg flange (340) extends upwardly from a top surface (332) of said leg body (330), and wherein said leg latch (350) is located on a bottom portion of said leg body (330), and wherein said leg latch (350) includes a latch flange (352) that extends downwardly from a location that is at or near a bottom front surface of said leg latch (350).

10. The protective liner as defined in claim 9, wherein a) a front end of said leg body (330) or a front surface of said leg flange (340) extends a distance forwardly from a front face of said body (310) that is equal to or greater than a distance of a front edge of said top flange (314) from said front face of said body (310), and/or b) a top surface of said leg body (330) is flat, and wherein side walls (334) of said leg body (330) are curved or flat.

11. The protective liner as defined in claim 10, wherein said side walls (334) of said leg body (330) of said hook leg (320) have a quarter-circle or quadrant shape so that said leg body (330) has a semi-circular shape profile; said protective liner (100) includes openings (170) that are spaced from a peripheral edge of said protective liner (100); a shape of said openings (170) is semi-circular.

12. The protective liner as defined in any one of claims 9-11, wherein a) a distance between a top edge of said leg flange (340) that extends upwardly from a top surface (332) of said leg body (330) and said top surface (332) of said leg body (330) is less than a distance between said bottom surface of said top flange on said body (310) and said top surface (332) of said leg body (330), and wherein said protective liner (100) includes openings (170) that are spaced from a peripheral edge of said protective liner (100), and wherein a distance between said top edge of said leg flange (340) and said bottom surface of said top flange (314) is equal to or greater than a distance between a top edge of opening (170) in said protective liner and a top edge of said protective liner (100), b) a height of said latch flange (340) is less than a height of a portion of said leg flange (340) that extends upwardly from a top surface of said leg body (330), c) said leg latch (350) is connected to said bottom portion of said leg body (330) a latch living hinge (354), and wherein said leg latch (350) is configured to move upwardly about said latch living hinge (354) when an upward force is applied to said leg latch (350) and to return to an original positon when the upward force is removed from said leg latch (350), d) a bottom portion of said leg flange (352) terminates above said bottom portion of said leg body (330) to create a space between a front end of said leg latch (350) and a bottom surface of said leg flange (352), and/or e) a portion of said leg latch (350) is configured to be movable into an interior of said leg body (330) when the upward force is applied to said leg latch (350).

13. The protective liner as defined in any one of claims 1-12, further including a protective sleeve (400); said protective sleeve (400) is configured to be releasably positioned over a portion of said hanging arrangement (300) and a portion of said protective liner (100) so as to provide protection to a portion of said protective liner (100) while said protective liner (100) is positioned on said hanging arrangement (300); a top of said protective sleeve (400) includes a sleeve opening that is configured to enable said handle (360) to pass through said sleeve opening when said protective sleeve (100) is positioned over said portion of said hanging arrangement (300) and said portion of said protective liner (100); said protective sleeve (400) includes a sleeve cavity that is configured to receive a portion of said protective liner (100) when said protective sleeve (400) is positioned over said portion of said handing arrangement (300) and said portion of said protective liner (100).

14. A hanger arrangement (300) that is configured to releasably connect to a protective liner (100) that includes one or more protective liner openings (170); said hanger arrangement (300) includes a body (310), one or more hook legs (320) that are connected to said body (310), and a handle (360) that is connected to said body (310); each of said one or more hook legs (320) are configured to be releasably connected to one of the protective liner openings (170) in the protective liner (100); said body (310) of said hanger arrangement (300) includes one or more features selected from the group consisting of a) said body (310) has rectangular shape, b) said body (310) has a length that is less than a width of a top portion of said protective liner (100), c) said body (310) include one or more openings (170) that are spaced from a peripheral edge of said body (310) and are spaced from said one or more hook legs (320), d) said body (310) includes a top flange (314) that is formed on a top portion of said body (310) extends forwardly from a front face of said body (310); each of said hook legs (320) extend forwardly from a front face of said body (310); each of said hook legs (320) is positioned below a top edge of said body (310) or below said top flange (314); each of said hook legs (320) includes a leg body (330), a leg flange (340), and a leg latch (350); said leg body (330) extends forwardly from said front face of said body (310); a portion of said leg flange (340) is positioned at or near a front-top edge of said leg body (330) and a top portion of said leg flange (340) extends upwardly from a top surface of said leg body (330); said leg latch (350) is located on a bottom portion of said leg body (330); said leg latch (350) includes a latch flange (352) that extends downwardly from a location that is at or near a bottom front surface of said leg latch (350).

15. The hanger arrangement protective as defined in claim 14, wherein a) a front end of said leg body (330) or a front surface of said leg flange (340) extends a distance forwardly from a front face of said body (310) that is equal to or greater than a distance of a front edge of said top flange (314) from said front face of said body (310), b) a top surface of said leg body (330) is flat; a side walls (334) of said leg body (330) are curved or flat, c) said side walls (334) of said leg body (330) of said hook leg (320) have a quarter-circle or quadrant shape so that said leg body (330) has a semi-circular shape profile; said protective liner (100) includes openings (170) that are spaced from a peripheral edge of said protective liner (100); a shape of said openings (170) is semi-circular, d) a distance between a top edge of said leg flange (340) that extends upwardly from a top surface of said leg body (330) and said top surface of said leg body (330) is less than a distance between said bottom surface of said top flange on said body (310) and said top surface (332) of said leg body (330); said protective liner (100) includes openings (170) that are spaced from a peripheral edge of said protective liner (100); a distance between said top edge of said leg flange (340) and said bottom surface of said top flange is equal to or greater than a distance between a top edge of opening (170) in said protective liner (100) and a top edge of said protective liner (100), e) a height of said latch flange (340) is less than a height of a portion of said leg flange (340) that extends upwardly from a top surface (332) of said leg body (330), f) said leg latch (350) is connected to said bottom portion of said leg body (330) a latch living hinge (354); said leg latch (350) is configured to move upwardly about said latch living hinge (354) when an upward force is applied to said leg latch (350) and to return to an original positon when the upward force is removed from said leg latch (350), g) a bottom portion of said leg flange (340) terminates above said bottom portion of said leg body (330) to create a space between a front end of said leg latch (350) and a bottom surface of said leg flange (340), h) a portion of said leg latch (350) is configured to be movable into an interior of said leg body (330) when the upward force is applied to said leg latch (350).

16. A protective liner system comprising a protective liner (100), in particular according to one of the claims 1-13, and a hanger arrangement (300), in particular according to one of the claims 14-15, said protective liner is configured to be removably connectable to a surface; said protective liner includes a liquid retention layer and a non-porous backing system; said liquid retention layer is at least partially formed of a porous material; said non-porous backing system is less porous than said liquid retention layer; said non-porous backing system is formed of different materials from said liquid retention layer; said non-porous backing system has a thickness that is less than a thickness of said liquid retention layer; said liquid retention layer includes a plurality of fibers; said non-porous backing system includes 0-50 wt.% fibers; a fiber content in said liquid retention layer is greater than a fiber content in said non-porous backing system; said non-porous backing system connected to a bottom surface of said liquid retention layer; said non-porous backing system includes one or more layers selected from the group consisting of a) a reinforcement layer, b) an adhesive layer, and c) a backing layer; said protective liner includes one or more protective liner openings that are spaced from a peripheral edge of said protective liner; said hanger arrangement is configured to releasably connect to said protective liner; said hanger arrangement includes a body, one or more hook legs that are connected to said body, and a handle that is connected to said body; each of said one or more hook legs are configured to be releasably connected to one of the protective liner openings in the protective liner; said body of said hanger arrangement includes one or more features selected from the group consisting of a) said body has rectangular shape, b) said body has a length that is less than a width of a top portion of said protective liner, c) said body include one or more openings that are spaced from a peripheral edge of said body and are spaced from said one or more hook legs, d) said body includes a top flange that is formed on a top portion of said body extends forwardly from a front face of said body; each of said hook legs extend forwardly from a front face of said body; each of said hook legs is positioned below a top edge of said body or below said top flange; each of said hook legs includes a leg body, a leg flange, and a leg latch; said leg body extends forwardly from said front face of said body; a portion of said leg flange is positioned at or near a front-top edge of said leg body and a top portion of said leg flange extends upwardly from a top surface of said leg body; said leg latch is located on a bottom portion of said leg body; said leg latch includes a latch flange that extends downwardly from a location that is at or near a bottom front surface of said leg latch.

17. The protective liner system as defined in claim 16, further including a protective sleeve; said protective sleeve is configured to be releasably positioned over a portion of said handing arrangement and a portion of said protective liner so as to provide protection to a portion of said protective liner while said protective liner is positioned on said hanging arrangement; a top of said protective sleeve includes a sleeve opening that is configured to enable said handle to pass through said sleeve opening when said protective sleeve is positioned over said portion of said handing arrangement and said portion of said protective liner; said protective sleeve includes a sleeve cavity that is configured to receive a portion of said protective liner when said protective sleeve is positioned over said portion of said handing arrangement and said portion of said protective liner.

18. The protective liner system as defined in claim 16 or 17, wherein each of said one or more hook legs are configured to be releasably connected to one of said protective liner openings; a shape of a top portion of said leg flange that is located above a top surface of said leg body in combination with a shape of said leg body located below said top surface of said leg body form a combined shape that has a shape and size that can fit through said protective liner openings; and wherein said leg latch is configured to be partially moveable upwardly before a front portion of said hook leg can pass through said protective liner opening.
